# EUROPEAN PATENT SPECIFICATION

(11) **EP 0 687 715 B1**
(45) Date of publication and mention of the grant of the patent: **10.10.2001**
(21) Application number: 95100509.9
(22) Date of filing: 16.01.1995
(51) Int. Cl.: C09D 5/08, C09D 163/00, C09D 151/08, C09D 175/04, C08K 3/36

(54) **Coated aluminum material**
Überzogenes Aluminiummaterial
Matériau d'aluminium revêtu

(30) Priority: 09.06.1994 JP 12743594; 09.06.1994 JP 12743694
(43) Date of publication of application: 20.12.1995
(73) Proprietor: Dai Nippon Toryo Co., Ltd., Osaka (JP)
(72) Inventor: Tanabe, Hiroyuki, Fuji-heim No. 202, Nasu-gun, Tochigi-ken (JP); Nagai, Masanori, Otawara-shi, Tochigi-ken (JP); Kato, Nobuyoshi, Nasu-gun, Tochigi-ken (JP); Hokamura, Sadakazu, Yamato-shi, Kanagawa-ken (JP)
(74) Representative: Wächtershäuser, Günter, Prof. Dr.

(56) References cited:
- EP-A- 0 344 717
- US-A- 4 910 097

## Description

The present invention relates to a coated aluminum material excellent in corrosion resistance, electrodeposition coating properties, press forming properties, chemical conversion treatment resistance, etc.

EP-A 344 717 discloses steel strips coated with a lubricating resin. US-A 4,910,097 discloses a steel sheet coated with an organic coating layer.

In recent years, light weight aluminum materials made of aluminum or an aluminum alloy have been used as exterior panels of e.g. automobile bodies, and automobile bodies constructed by a combination of steel materials and aluminum materials have been on the market. Such automobile bodies constructed by a combination of steel materials and aluminum materials are produced, for example, by assembling independently fabricated steel materials and aluminum materials, subjecting the assembly to degreasing and chemical conversion treatment and then sequentially and continuously applying electrodeposition coating, intermediate coating and top coating thereto.

However, conventional aluminum materials are poor in the press forming properties. Further, aluminum materials are hardly degreased as compared with steel materials when press oil or rust preventive oil used during the fabrication is to be removed. Accordingly, when chemical conversion treatment such as zinc phosphate treatment is applied thereto, irregularity in the chemical conversion treatment is likely to result on its surface, whereby the corrosion resistance, the water resistant secondary adhesion or the like tends to be poor, and elution of aluminum is likely to occur during the chemical conversion treatment, and if the amount of such elution exceeds a certain level, the chemical conversion treatment tends to be hindered. Further, as the aluminum materials are used in combination with steel materials, there has been a problem that galvanic corrosion of aluminum materials is likely to result due to the contact of different metals.

To improve the press forming properties in an attempt to overcome the above problem, there have been proposed, for example, a method of changing the metal composition in an aluminum alloy (Japanese Unexamined Patent Publications No. 171547/1983, No. 201748/1986, No. 201749/1986 and No. 27544/1987), and a method of roughening the surface of an aluminum material (Japanese Unexamined Patent Publications No. 276707/1986 and No. 21047/1989). However, these methods provide no solution to the above-mentioned problems with respect to the corrosion resistance, water resistant secondary adhesion and galvanic corrosion resistance.

Further, to prevent irregularity in chemical conversion treatment, there have been proposed, for example, a method of chemically cleaning the surface of an aluminum material (e.g. Japanese Unexamined Patent Publications No. 240675/1989, NO. 279788/1989 and No. 57692/1990), and a method of lowering the viscosity of the rust preventive oil to facilitate degreasing (e.g. Japanese Unexamined Patent Publication No. 115385/1990). In order to make the same chemical conversion treatment applicable to an aluminum material and a steel material, a method has been proposed in which the surface area ratio of the two materials has been specified (e.g. Japanese Unexamined Patent Publication No. 104089/1986). However, none of such methods solves the problem with respect to the press forming properties.

In the above method, it has also been proposed that the surface of the aluminum material is preliminarily treated by prime-coating and the coated aluminum material having a prime-coating applied thereto is fabricated and assembled with a steel material (e.g. Japanese Unexamined Patent Publications No. 180218/1991 and No. 9476/1992). However, such a method has problems that in the subsequent chemical conversion treatment, the coating film is likely to be peeled, whereby the corrosion resistance will deteriorate, that the electric deposition coating in the subsequent step tends to be poor, and that the press forming properties tend to be poor. Thus, a practically useful coating material which fully satisfies the requirements for e.g. the chemical conversion treatment resistance, the corrosion resistance, the press forming properties and the electric deposition coating properties, has not yet been developed. Under these circumstances, in order to solve such problems, the present inventors developed an organic solvent-type coating composition for aluminum materials, which comprises a lubricant powder and an epoxy resin composed of epichlorohydrin skeletons and bisphenol skeletons comprising bisphenol A skeleton and bisphenol F skeleton, and filed a patent application (Japanese Unexamined Patent Publication No. 277577/1992). The coated aluminum material having such a coating composition applied, has improved chemical conversion treatment resistance, corrosion resistance, press forming properties and electric deposition coating properties. However, at present, higher performance is required with respect to the corrosion resistance, the press forming properties, etc. than the performance required at the time of filing the application. Further, a demand for an aqueous coating material has increased from the viewpoint of environmental protection.

Under these circumstances, it is an object of the present invention to provide a coated aluminum material having formed on the surface of an aluminum material a coating film excellent in the chemical conversion treatment resistance, corrosion resistance, press forming properties, electric deposition coating properties, etc.

To fulfil the above object, the present invention provides a coated aluminum material comprising an aluminum material and an aqueous coating composition coated on the surface thereof, wherein the aqueous coating composition comprises (A) a water-soluble or water-dispersible synthetic resin, (B) a lubricant powder, (C) silica particles and (D) a silane coupling agent.

Now, the present invention will be described in detail with reference to the preferred embodiments.

The water-soluble or water-dispersible synthetic resin (A) to be used in the present invention is an epoxy resin or an acryl-modified epoxy resin.

The epoxy resin may, for example, be ① an epoxy resin obtained by subjecting a bisphenol such as bisphenol A, bisphenol F or bisphenol AD, and epichlorohydrin to a condensation reaction by a conventional method, or the one obtained by reacting such a resin with a polyfunctional compound such as metaxylenediamine, hexamethylene diisocyanate or ethylene glycol and forming the resulting epoxy resin of a higher molecular weight containing at least two epoxy groups per molecule, into an aqueous dispersion in combination with a surfactant, or ② the one obtained by modifying such a resin with a basic nitrogen compound such as propylamine, butylamine or diethylamine or by a polybasic acid or its acid anhydride, such as isophthalic acid, succinic acid or phthalic anhydride, followed by neutralization to form an aqueous solution or aqueous dispersion. The molecular weight of the epoxy resin is usually from about 500 to 100,000, preferably from 500 to 10,000. If the molecular weight is smaller than this range, the coating film properties such as corrosion resistance, alkali resistance and water resistance tend to be low. On the other hand, if it is larger than the above range, it tends to be difficult to obtain an aqueous solution or an aqueous dispersion.

The above acryl-modified epoxy resin may, for example, be a resin which is produced as follows. Namely, a bisphenol type epoxy resin and a polymerizable unsaturated group-containing polybasic acid or its acid anhydride are heated and reacted in a solvent in the presence of a catalyst to introduce a polymerizable unsaturated group to the bisphenol type epoxy resin. Then, this bisphenol type epoxy resin having a polymerizable unsaturated group and a polymerizable unsaturated monomer component are heated and reacted for graft polymerization to obtain an acryl-modified epoxy resin.

As the above bisphenol type epoxy resin, a bisphenol A type epoxy resin, a bisphenol F type epoxy resin or a mixture thereof can be used, and the one having an epoxy equivalent of from 170 to 3,500, preferably from 800 to 2,500, is preferred.

Specific examples of the bisphenol type epoxy resin include commercial products such as Epikote 801, 802, 807, 815, 819, 825, 827, 828, 834, 1001, 1002, 1003, 1004, 1007 and 1010 (tradenames, manufactured by Yuka Shell Epoxy K.K.); DER317, 324, 325, 330, 331J, 337, 343, 361, 661 and 662 (tradenames, manufactured by Dow Chemical); Epichlon 840, 850, 855, 1,050 and 1055 (tradenames, manufactured by Dainippon Ink and Chemicals, Inc.); and Araldite GY250, 260, 280, 255, 257, 6071 and 7072 (tradenames, manufactured by Ciba Geigy).

The above-mentioned polymerizable unsaturated group-containing polybasic acid or its acid anhydride may, for example, be maleic acid, fumaric acid, itaconic acid, citraconic acid or acid anhydrides thereof, as typical examples.

As examples of the above polymerizable unsaturated monomer component, a carboxyl group-containing polymerizable unsaturated monomer such as (meth)acrylic acid, maleic acid, fumaric acid, itaconic acid or maleic anhydride, is used as an essential constituting monomer, and a hydroxyl group-containing monomer such as hydroxyethyl (meth)acrylate, hydropropyl (meth)acrylate or hydroxybutyl (meth)acrylate; an acetoacetyl group-containing monomer such as acetoacetoxyethyl (meth)acrylate; a (meth)acrylic acid ester monomer such as methyl (meth)acrylate, ethyl (meth)acrylate, propyl (meth)acrylate, butyl (meth)acrylate, 2-ethylhexyl (meth)acrylate, lauryl (meth)acrylate or cyclohexyl (meth)acrylate; styrene or a substituted styrene monomer such as vinyltoluene or methylstyrene; (meth)acrylnitrile, vinyl chloride, vinyl acetate, vinyl propionate, a maleic acid dialkyl ester, may be mentioned. These monomers may be used alone or in combination as a mixture of two or more of them.

The above-mentioned catalyst for reaction may, for example, be a tertiary amine such as triethylamine, a quaternary ammonium salt compound such as tetramethylammonium chloride, a lithium compound such as lithium chloride or lithium bromide, an imidazole compound such as butyl imidazole, sodium acetate, sodium phenolate, 1,8-diazabicyclo(5.4.0)-7-undecene, sodium hydroxide, or potassium hydroxide.

The reaction of the bisphenol type epoxy resin with a polymerizable unsaturated group-containing polybasic acid or its acid anhydride is carried out to introduce a polymerizable unsaturated group to the bisphenol type epoxy resin, so that a polymerizable unsaturated monomer component can be grafted, as described above. Therefore, the equivalent ratio of the epoxy groups of the bisphenol type epoxy resin to the carboxyl groups of the polymerizable unsaturated group-containing polybasic acid or its acid anhydride is usually from 1:0.05 to 1:0.8, preferably from 1:0.1 to 1:0.3. If the polybasic acid or its acid anhydride is less than the above range, the graft active sites for grafting the polymerizable unsaturated monomer component tend to be less, whereby the effect for modifying the acrylic resin i.e. the solubility or the dispersion stability of the acryl-modified epoxy resin in water as the solvent, tends to be low, or the flexibility of the coating film thereby obtained tends to be poor. On the other hand, if it exceeds the above range, gelation is likely to occur during the graft polymerization.

By the reaction of the bisphenol type epoxy resin with the polymerizable unsaturated group-containing polybasic acid or its acid anhydride, the polymerizable unsaturated group is introduced, and to the polymerizable unsaturated group, the polymerizable unsaturated monomer component is grafted to obtain an acryl-modified epoxy resin. As the polymerizable unsaturated monomer component to be used here, a carboxyl group-containing polymerizable unsaturated monomer is used as an essential component.

The carboxyl group-containing polymerizable unsaturated monomer is used to introduce a carboxyl group to the resin so that the resulting acryl-modified epoxy resin can be dissolved or stably dispersed in water as the solvent, when it is neutralized by a neutralizing agent. Further, the carboxyl group will also contribute to improvement of the adhesion of the resulting coating film.

Accordingly, the amount of the carboxyl group-containing polymerizable unsaturated monomer to be used, is preferably such that the acid value of the resulting acryl-modified epoxy resin will be at least about 20, preferably from 40 to 200.

Further, in order to improve the adhesion of the coating film or the storage stability of the coating composition, it is preferred to use a hydroxyl group-containing monomer in combination with the polymerizable unsaturated monomer component, in such an amount that the hydroxyl value of the acryl-modified epoxy resin will be from about 10 to 50. Likewise, in order to improve the adhesion, corrosion resistance, boiling water resistance and alkali resistance of the obtained coating film, it is advisable to incorporate an acetoacetyl group-containing polymerizable unsaturated monomer in an amount of from 1 to 20 wt% of the polymerizable unsaturated monomer component.

The acryl-modified epoxy resin usually has a weight average molecular weight of about 2,000 to 100,000, preferably from 4,000 to 70,000. The weight ratio of the bisphenol type epoxy resin to the polymerizable unsaturated monomer to be graft polymerized thereto, is preferably within a range of from 4:6 to 9:1.

If the polymerizable unsaturated monomer is less than the above range, the flexibility of the resulting coating film and the corrosion resistance of the press forming portion tend to be poor. On the other hand, if it exceeds the above range, the bisphenol type epoxy resin decreases correspondingly, whereby the adhesion, corrosion resistance or the like of the resulting coating film tends to be low. The acryl-modified epoxy resin is neutralized by a neutralizing agent and used in such a state that it can be diluted with water so that it will be dissolved or stably dispersed in water. As such a neutralizing agent, ammonia, methylamine, dimethylamine, trimethylamine, ethylamine, diethylamine, triethylamine, dimethylethanolamine, monoethanolamine, diethanolamine, triethanolamine or morpholine may be mentioned as typical examples.

The lubricant powder (B) constituting the coating composition to be used in the present invention is preferably the one which maintains the powdery state at room temperature and after forming a coating film. Such a lubricant powder is incorporated to roughen the resulting coating film surface and thus to impart the lubricating properties i.e. to reduce the kinematic friction coefficient, thereby to improve the formability, particularly the press forming property, of the coated aluminum material. As such a lubricating powder, a synthetic wax powder and a solid lubricant powder may be mentioned as typical examples.

As the synthetic wax powder, a synthetic hydrocarbon; a fatty acid ester; a fatty acid nitrogen derivative such as a fatty acid amide or a substituted amide; a modified wax such as a montan wax derivative or oxidized montan wax; a high molecular weight compound such as polyester wax; and a chlorinated wax such as chlorinated paraffin, may, for example, be mentioned as typical examples. Particularly preferred is a synthetic wax powder having a saponification value and a high melting point.

As the solid lubricant powder, a laminar lubricant such as graphite, molybdenum disulfide, tungsten disulfide, boron nitride or fluorinated graphite; a plastic lubricant such as polyvinyl chloride, polystyrene, polymethyl (meth)acrylate, polyamide, high density polyethylene, polypropylene or polytetrafluoroethylene; a metal soap such as a calcium, barium, lithium, zinc or aluminum soap of a fatty acid, may, for example, be mentioned as typical examples. Particularly preferred is a plastic lubricant or a metal soap having a high surface lubricating property.

The lubricant powder usually has an average particle size of from 0.1 to 20 *µ*m. If the particle size is too small at a level of less than 0.1 *µ*m, the lubricant particles tend to be hardly exposed on the coating film, whereby the lubricating properties will be inadequate, and the press forming properties tend to be inferior. On the other hand, if the particle size is too large at a level exceeding 20 *µ*m, the film-forming property of the coating film and the stability of the coating material tend to have problems. A preferred range of the particle size of the lubricant powder is from 0.5 to 12 *µ*m.

The lubricant powder is incorporated preferably in an amount of from about 1 to 50 parts by weight, more preferably from 3 to 40 parts by weight, per 100 parts by weight of the water-soluble or water-dispersible synthetic resin (A), whereby the lubricating properties of the coating film will be obtained, and the physical properties and chemical strength of the coating film will be proper.

The silica particles (C) constituting the coating composition to be used in the present invention serve to roughen the coating film by their presence in the coating film and contribute to the corrosion resistance and press forming properties of the coated aluminum material as silanol groups present on the surface of the silica particles are bonded to the aluminum material. As such silica particles, water-dispersed uniform colloidal silica, water-dispersed aggregated colloidal silica and water-dispersible powdery fumed silica may be mentioned as typical examples.

Commercial products of water-dispersed uniform colloidal silica include, for example, Adelite AT-20N (tradename, manufactured Asahi Denka Kogyo K.K.), and Snowtex ST-Nup, Snowtex-up, Snowtex 20, Snowtex 30, Snowtex 40, Snowtex C, Snowtex N, Snowtex O, Snowtex S and Snowtex OL (tradenames, manufactured by Nissan Chemical Industries, Ltd.).

A commercial product of water-dispersed aggregated colloidal silica may, for example, be PT-3025 (tradename, Nissan Chemical Industries, Ltd.).

Commercial products of water-dispersible powdery fumed silica include, for example, Aerosil 130, Aerosil 200, Aerosil 300, Aerosil 380, Aerosil RX200, Aerosil R202, Aerosil T805, Aerosil R805, Aerosil OX50, Aerosil MOX80, Aerosil MOX170 and Aerosil COK84 (tradenames, manufactured by Nippon Aerosil K.K.).

The silica particles are most preferably those having particle sizes within a range of from 0.01 to 2 *µ*m in a water-dispersed state, so that adequate effects for roughening the surface of the coating film can be obtained. If the particle size of silica particles is too small, the surface roughening of the coating film tends to be inadequate, and accordingly the press forming properties will be inferior. On the other hand, if the particle size exceeds 2 *µ* m, the film forming property (adhesion) of the coating film and the stability of the coating composition tend to be poor.

The silica particles are incorporated usually from about 5 to 100 parts by weight (as calculated as the solid content), preferably from 8 to 80 parts by weight, per 100 parts by weight of the water-soluble or water-dispersible synthetic resin (A). If the silica particles are less than this range, the surface roughening of the coating film tends to be inadequate, and if they are excessive, the film-forming property of the coating film and the stability of the coating composition tend to be poor.

The silane coupling agent (D) constituting the coating composition to be used in the present invention has a nature such that it is oriented to the surface of the aluminum material when coated. Accordingly, it forms a uniform barrier layer on the surface of the aluminum material and thus very much contributes to the improvement of corrosion resistance. Further, it is observed that the silane coupling agent reacts with the above-mentioned synthetic resin (A) and the silica particles (C) during the baking, and thus it very much contributes to the improvement of the adhesion of the coating film and to the fixing of silica particles.

The silane coupling agent may, for example, be *γ* -chloropropyltrimethoxysilane, vinyltrichlorosilane, vinyltriethoxysilane, vinyltrimethoxysilane, vinyl·tris(β-methoxyethoxy)silane, *γ*-methacryloxypropyltrimethoxysilane, *β*-(3,4-epoxycyclohexyl)ethyltrimethoxysilane, γ-glycidoxypropyltrimethoxysilane, *γ* -mercaptopropyltrimethoxysilane, *γ*-aminopropyltriethoxysilane, N-*β*-(aminoethyl)aminopropyltrimethoxysilane, *γ*-ureidopropyltriethoxysilane, *γ*-glycidoxypropylmethyldiethoxysilane, *γ*-glycidoxypropyldimethyl, or *γ*-glycidoxypropyldimethylethoxysilane.

The silane coupling agent is incorporated usually in an amount of from about 0.01 to 10 parts by weight (as calculated as a solid content), preferably from 0.05 to 8 parts by weight, per 100 parts by weight of the water-soluble or water-dispersible synthetic resin (A). If the silane coupling agent is less than this range, the above-mentioned effects tend to be hardly obtained. On the other hand, if it is excessive, the stability of the coating composition tends to be poor.

The coating composition to be used in the present invention is a coating material comprising the water-soluble or water-dispersible synthetic resin (A), the lubricant powder (B), the silica particles (C) and the silane coupling agent (D) described above, as essential constituting components and having such essential constituting components uniformly dispersed or dissolved in water to have a solid content of from about 10 to 40 wt%.

The coating composition to be used in the present invention may further contain a water-soluble organic solvent; a melamine resin, a benzoguanamine resin or a crosslinking agent such as a polyblocked isocyanate compound; an organic or inorganic pigment; an additive such as a dispersing agent, an antisetting agent or a levelling agent, or various modifying resins.

Now, method for producing a coated aluminum material of the present invention will be described.

As the aluminum material to be used in the present invention, those commonly used for press forming products, such as non-heat treated Aℓ-Mg type 5000 type alloy, heat treated Aℓ-Cu-Mg type 2000 type alloy, heat treated Aℓ-Mg-Zn type 7000 type alloy, heat treated Aℓ-Mg-Si type 6000 type alloy, non-heat treated Aℓ-Mn type 3000 type alloy and 4000 type alloy, and non-heat treated pure aluminum type 1000 malleable material, may be mentioned as typical examples. However, the aluminum material is not limited to such specific examples.

The aluminum material may be an aluminum material having surface treatment applied by a conventional means, such as reactive chromate treatment with e.g. chromium chromate or phosphoric acid chromate, chromium treatment such as coating type chromate treatment or electrolytic chromate treatment, or non-chromium treatment such as zircon phosphate treatment, silane coupling treatment, titanium coupling treatment, zircon coupling treatment or aluminum coupling treatment.

The coated aluminum material of the present invention is prepared by coating the above described coating composition on the surface of such an aluminum material by such a means as spraying, roll coating or shower coating, followed by curing at a temperature of from 80 to 300°C, preferably from 100 to 250°C.

Even a thin film with a film thickness of about a few *µ*m may provide an adequate performance, but the film thickness may be further increased. For example, the film thickness is preferably from 0.1 to 10 *µ*m, more preferably from 1 to 5 *µ*m.

The coated aluminum material thus obtained, is subjected to electric deposition coating or usual top coating and then applied in the fields of exterior panels of automobiles, household appliances and construction materials.

By coating the above coating composition on the aluminum material, a coated aluminum material excellent in the corrosion resistance, the electric deposition coating property, the adhesion and the press forming properties, can be obtained. Especially when the coated aluminum material of the present invention is used as an aluminum material for the production of an automobile body by combined use of a steel material and the aluminum material, it provides excellent durability i.e. alkali resistant degreasing properties, against alkali treatment in the degreasing process, and in the subsequent chemical conversion treatment such as zinc phosphate treatment, a chemically converted coating film is formed only on the steel material, and no chemical coating film will be formed on the coated aluminum material. Accordingly, the coated aluminum material of the present invention is an aluminum material coated with a practically valuable coating material, which has various effects such that a defect of irregularities in the chemical conversion treatment which occurs on conventional aluminum materials, can be eliminated, the chemical conversion treatment resistance is good, the galvanic corrosion of the aluminum material due to contact of different metals between the steel material and the coated aluminum material can be prevented.

Now, the present invention will be described in further detail with reference to Examples. However, it should be understood that the present invention is by no means restricted by such specific Examples. In the Examples, "parts" and "%" mean "parts by weight" and "% by weight", respectively.

### EXAMPLES 1 to 5 and COMPARATIVE EXAMPLES 1 to 4

A mixture comprising the epoxy resin aqueous solution (aqueous dispersion), the lubricant powder, the silica particles and the silane coupling agent as identified in Table 1 or 2, was diluted with deionized water to obtain a coating material having a solid content of 20%.

The obtained coating material was coated by roll coating on the surface treated aluminum material (thickness: 1.0 mm) as identified in Table 1 or 2 so that the dry film thickness would be 3 *µ*m and baked so that the maximum plate temperature became 150°C in 30 seconds, followed by tests on the corrosion resistance, the press forming properties, the alkali resistance, the chemical conversion treatment resistance, the electric deposition coating properties, the top coating adhesion, the water resistance, the lubricating properties and the stability of the coating material. The results are shown in Table 3.

As is apparent from Table 3, in Examples 1 to 5 in which the coating compositions of the present invention were used, the coating films had excellent properties. On the other hand, in Comparative Example 1 containing no lubricant powder, the press forming properties were inferior, in Comparative Example 2 containing no silica particles, the corrosion resistance was inferior, in Comparative Example 3 containing no silane coupling agent, the water resistance was inferior, and in Comparative Example 4 containing no silica particles and no silane coupling agent, the corrosion resistance was poor.

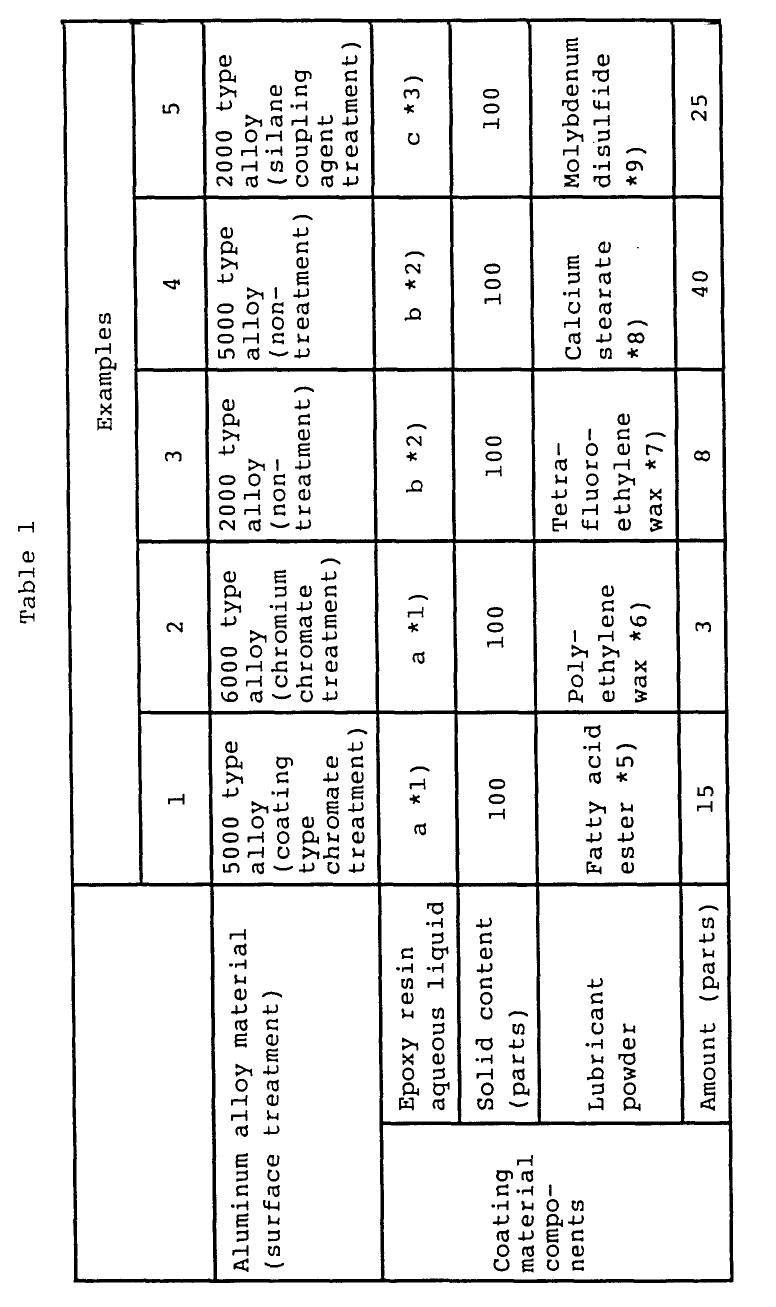

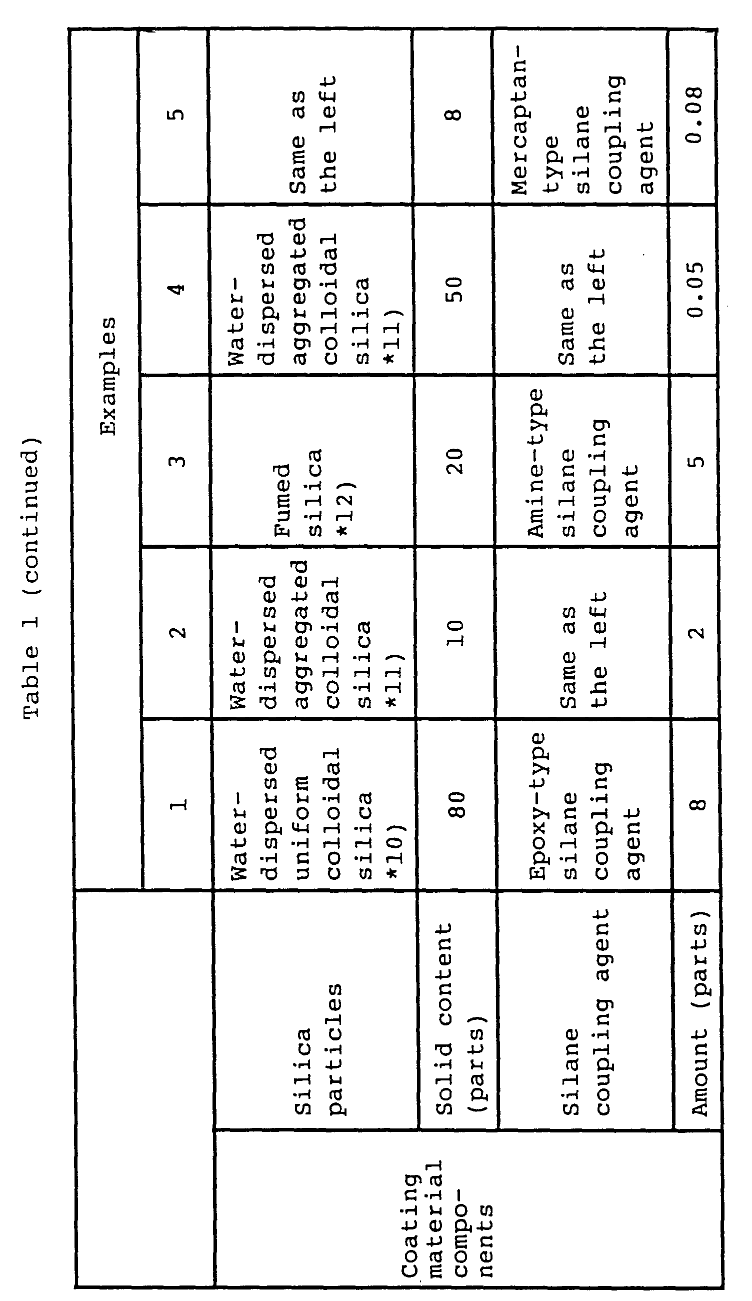

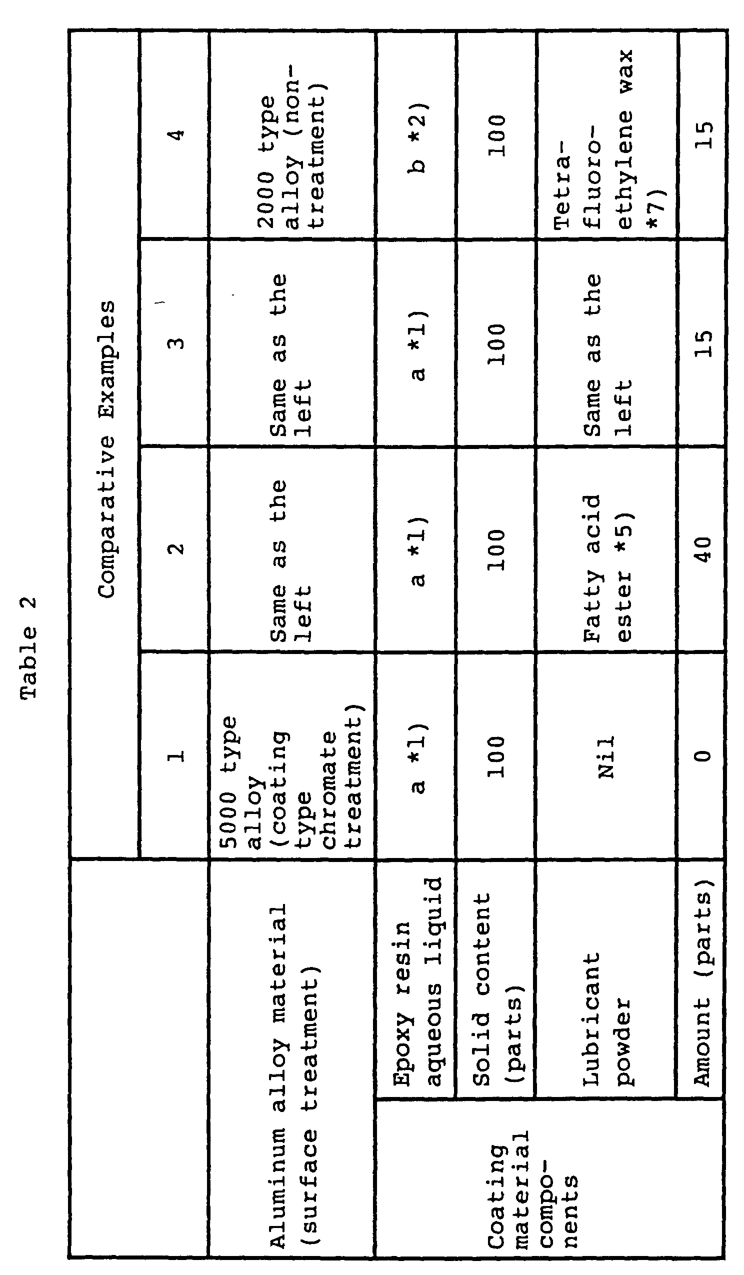

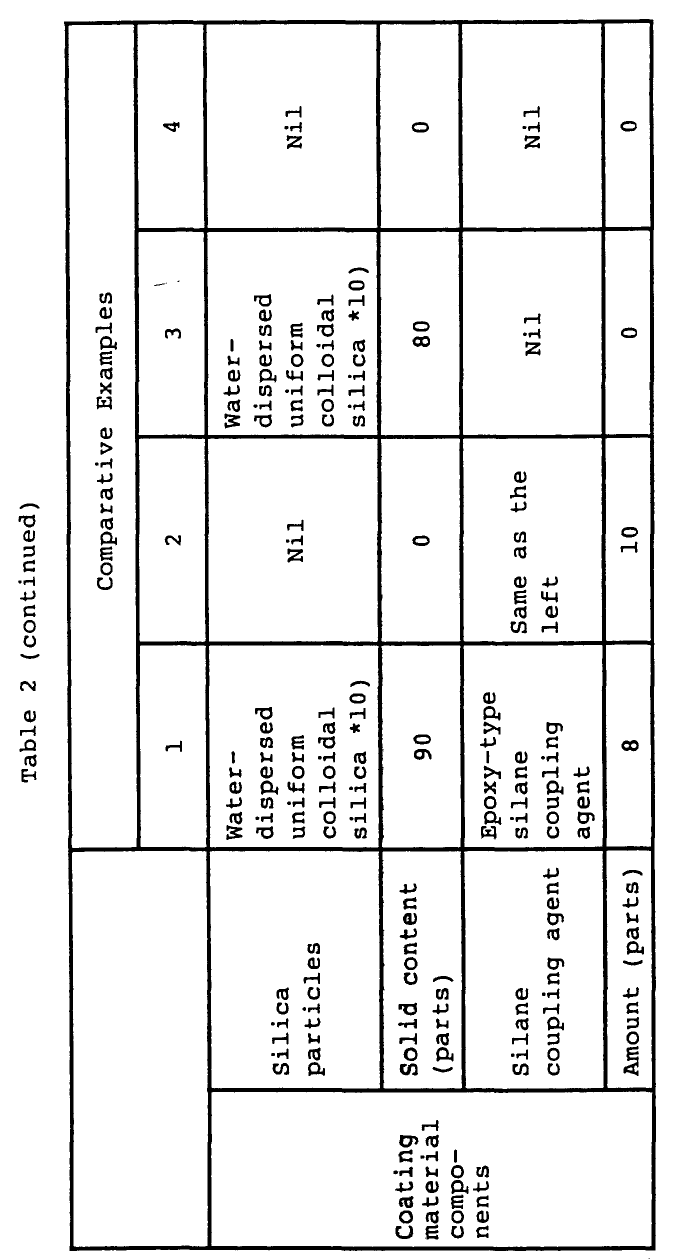

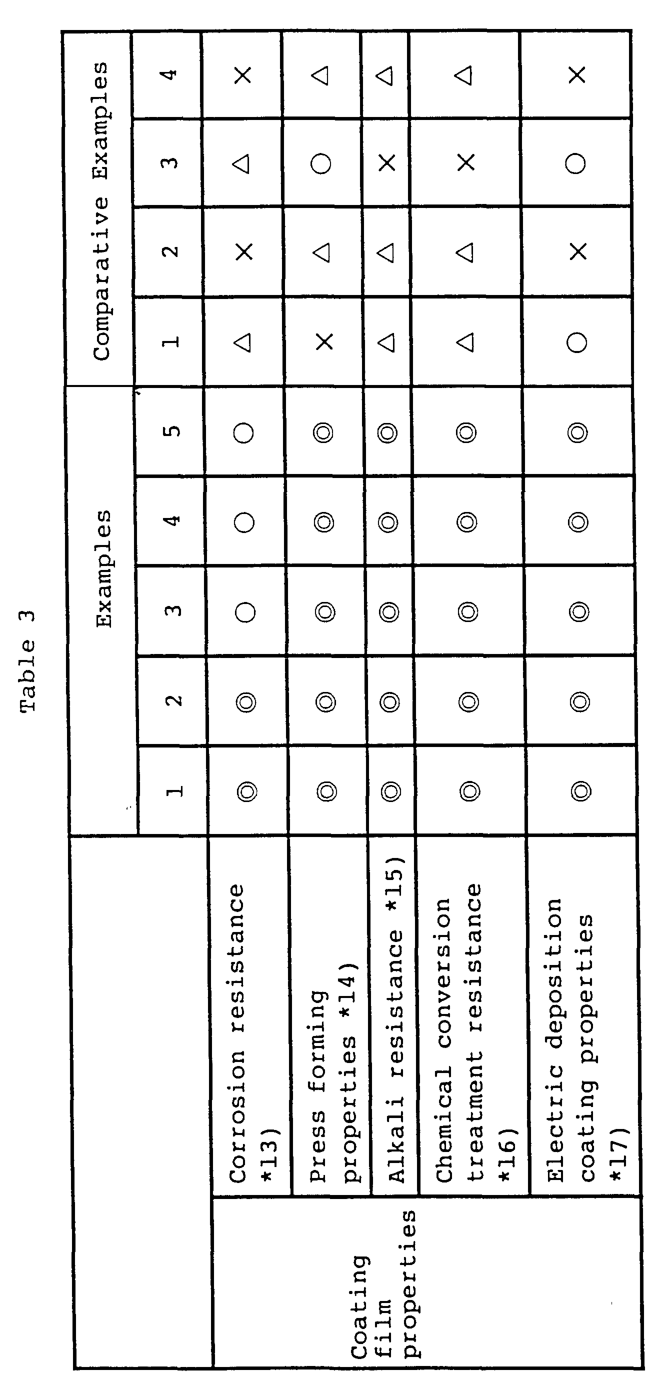

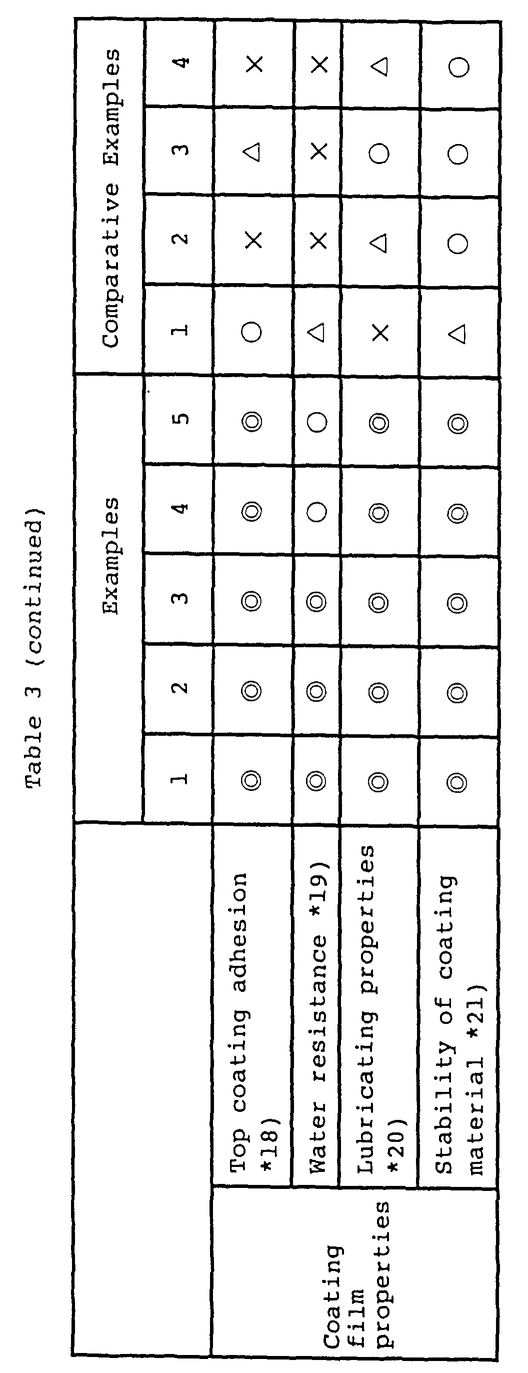

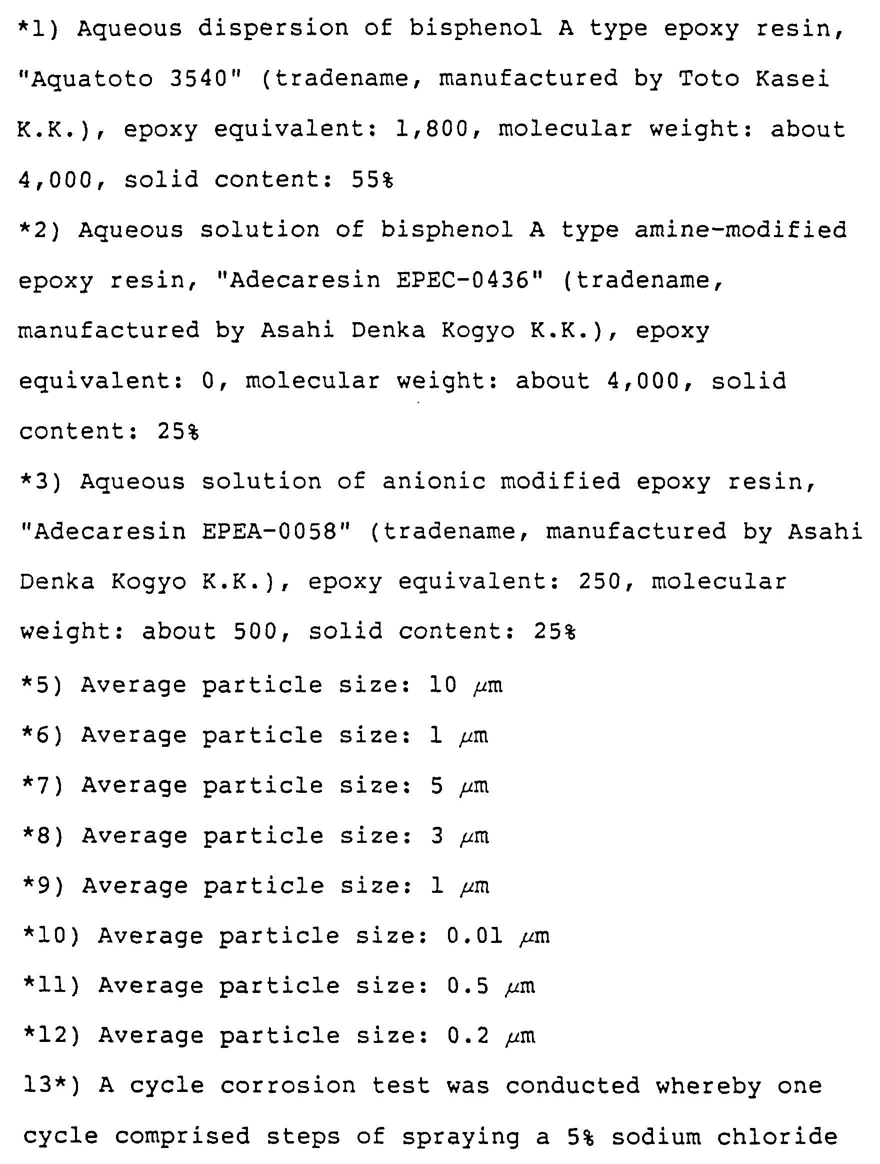

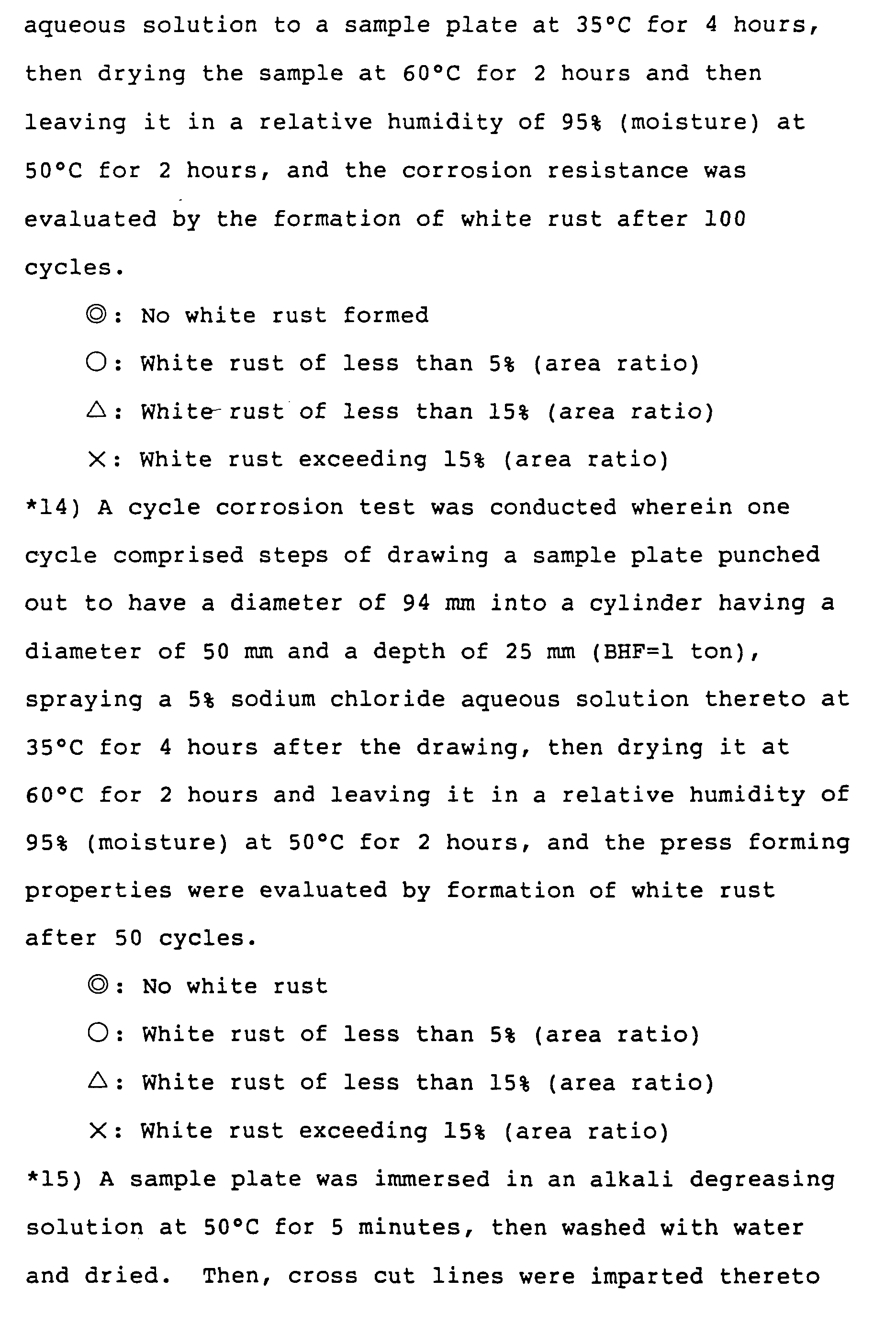

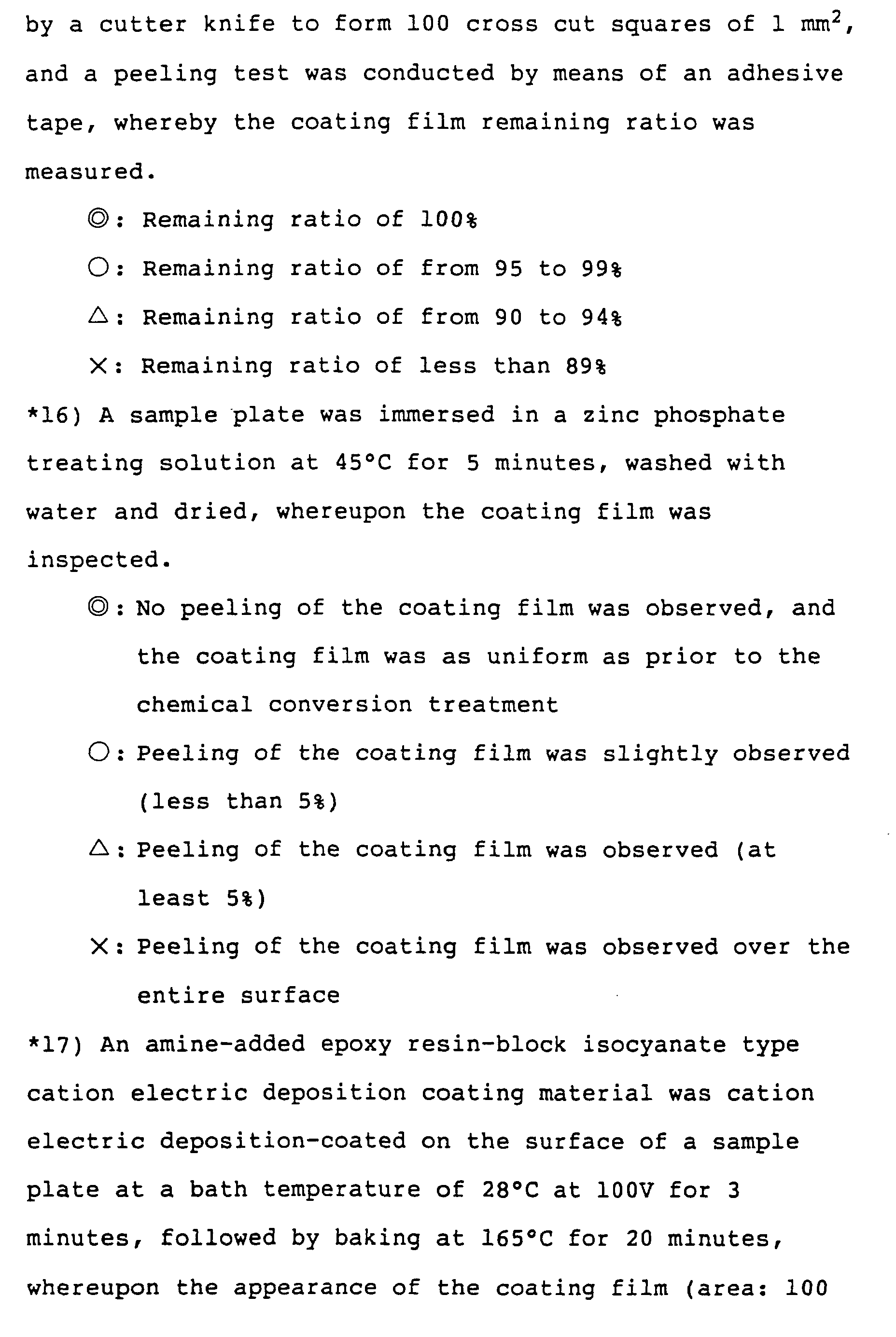

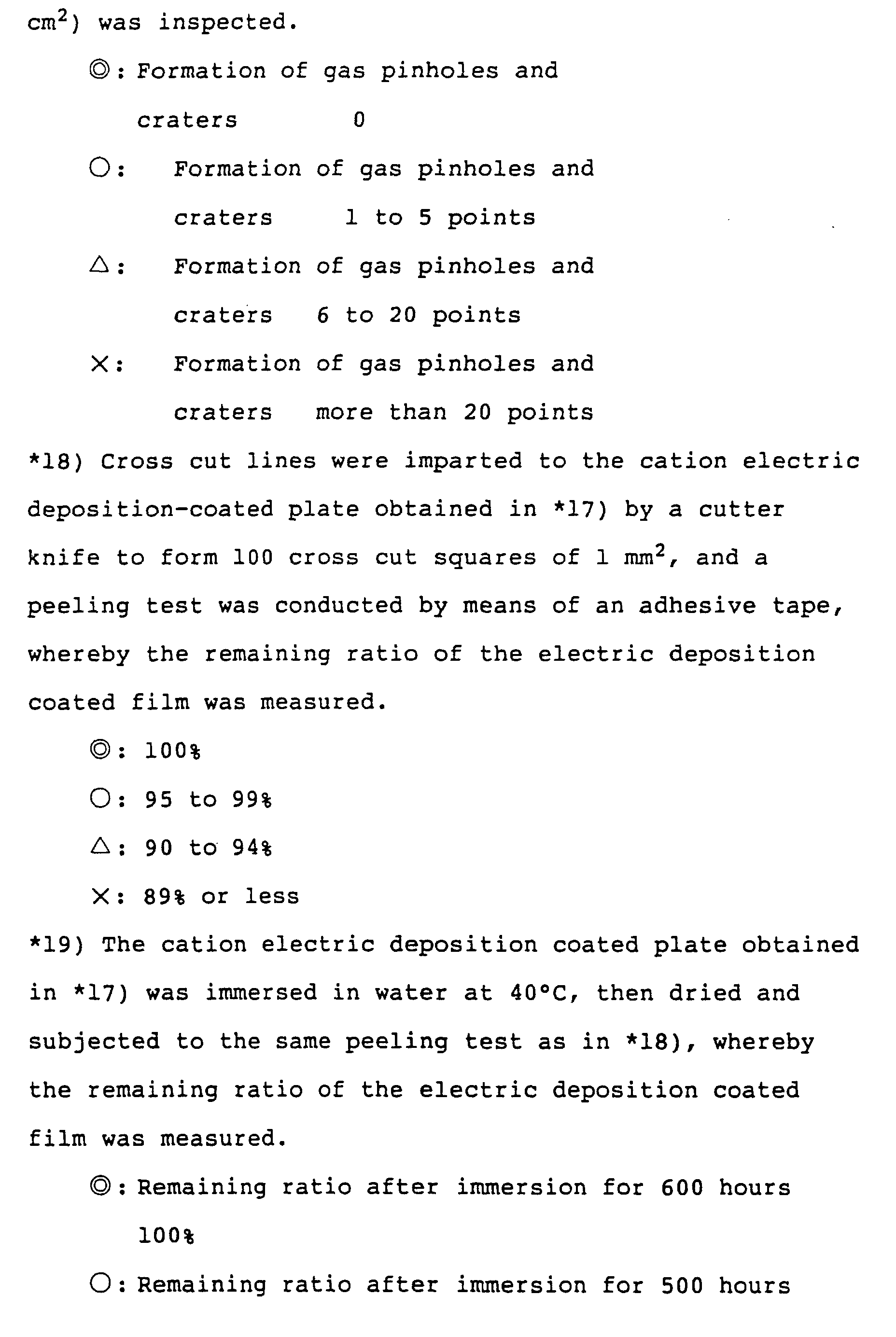

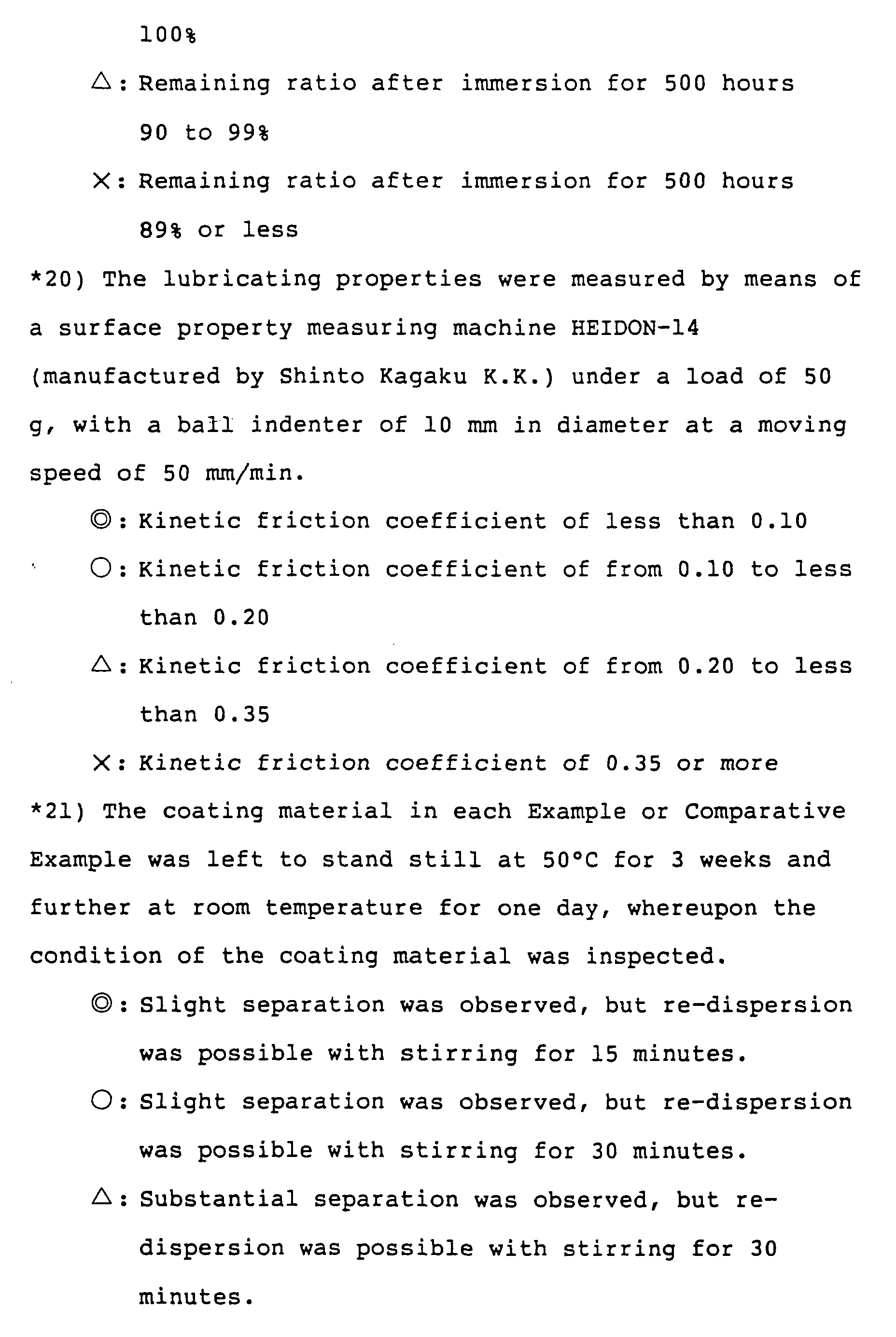

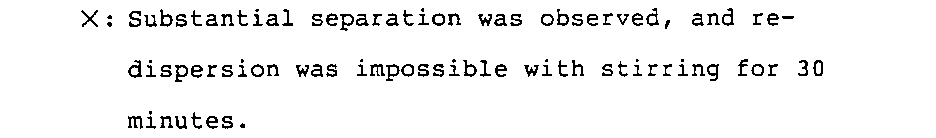

Now, Examples will be given in which an acryl-modified epoxy resin was used as the synthetic resin.

### Preparation of polymerizable unsaturated group-containing epoxy resin solution (A)

Into a reactor equipped with a stirrer, a reflux condenser, a nitrogen gas supply means and a thermometer, 696 parts of a bisphenol A type epoxy resin (Epikote 1007, tradename, manufactured by Yuka Shell Epoxy K.K., epoxy equivalent: 1,750 to 2,200) and 350 parts of ethylene glycol monobutyl ether were charged and dissolved under heating. Then, while introducing a nitrogen gas, 2 parts of fumaric acid and 0.1 part of triethylamine were added thereto with stirring, and the mixture was reacted at 130°C for 5 hours to obtain a polymerizable unsaturated group-containing epoxy resin solution (A) having a solid content of 67%. Here, the reaction was conducted under such a condition that the equivalent ratio of the epoxy groups of the above epoxy resin to the carboxyl groups of the polybasic acid was 1:0.1.

### Preparation of polymerizable unsaturated group-containing epoxy resin solution (B)

A polymerizable unsaturated group-containing epoxy resin solution (B) having a solid content of 67% was obtained in the same manner as in the preparation of the above resin solution (A) except that the amount of fumaric acid was changed to 4 parts. The reaction was conducted under such a condition that the equivalent ratio of the epoxy groups of the epoxy resin to the carboxyl groups of the polybasic acid was 1:0.2.

### Preparation of polymerizable unsaturated group-containing epoxy resin solution (C)

A polymerizable unsaturated group-containing epoxy resin solution (C) having a solid content of 67% was obtained in the same manner as in the preparation of the above resin solution (A) except that the amount of fumaric acid was changed to 6 parts. The reaction was conducted under such a condition that the equivalent ratio of the epoxy groups of the epoxy resin to the carboxyl groups of the polybasic acid was 1:0.3.

### Preparation of acryl-modified epoxy resin aqueous solution (1)

Into the above-mentioned reactor, 105 parts of the polymerizable unsaturated group-containing epoxy resin solution (B) was charged and heated to 90°C. Then, a mixture comprising 16.2 parts of styrene, 8 parts of butyl acrylate, 5.8 parts of acrylic acid, 2.4 parts of azobisisobutyronitrile and 20 parts of ethylene glycol monobutyl ether, was dropwise added thereto with stirring over a period of 2 hours, and the mixture was further reacted at the same temperature for 4 hours. The mixture was cooled to 50°C, and a mixture comprising 5.7 parts of dimethylethanolamine and 170 parts of deionized water, was dropwise added thereto with stirring over a period of 30 minutes, to obtain an acryl-modified epoxy resin (acid value: 45, molecular weight: 42,000, epoxy resin/acryl monomer = 7/3) aqueous solution (1) having a solid content of 30%.

### Preparation of acryl-modified epoxy resin aqueous solution (2)

An acryl-modified epoxy resin (acid value: 45, molecular weight: 52,000, epoxy resin/acryl monomer = 7/3) aqueous solution (2) having a solid content of 30%, was obtained in the same manner as in the preparation of the acryl-modified epoxy resin aqueous solution (1) except that the polymerizable unsaturated monomer components were changed to 12.8 parts of styrene, 6.4 parts of butyl acrylate, 5.8 parts of acrylic acid and 5 parts of acetoacetoxy methacrylate.

### Preparation of acryl-modified epoxy resin aqueous solution (3)

An acryl-modified epoxy resin (acid value: 45, molecular weight: 50,000, epoxy resin/acryl monomer = 7/3) aqueous solution (3) having a solid content of 30%, was obtained in the same manner as in the preparation of the acryl-modified epoxy resin aqueous solution (1) except that the polymerizable unsaturated monomer components were changed to 8.8 parts of styrene, 6.4 parts of butyl acrylate, 5.8 parts of acrylic acid, 4 parts of 2-hydroxyethyl methacrylate and 5 parts of acetoacetoxy methacrylate.

### Preparation of acryl-modified epoxy resin aqueous solution (4)

An acryl-modified epoxy resin (acid value: 45, molecular weight: 45,000, epoxy resin/acryl monomer = 7/3) aqueous solution (4) having a solid content of 30%, was obtained in the same manner as in the preparation of the acryl-modified epoxy resin aqueous solution (1) except that the polymerizable unsaturated monomer components were changed to 8.8 parts of styrene, 6.4 parts of butyl acrylate, 5.8 parts of acrylic acid, 4.0 parts of 2-hydroxyethyl methacrylate and 5 parts of methyl methacrylate.

### Preparation of acryl-modified epoxy resin aqueous solution (5)

An acryl-modified epoxy resin (acid value: 45, molecular weight: 40,000, epoxy resin/acryl monomer = 7/3) aqueous solution (5) having a solid content of 30%, was obtained in the same manner as in the preparation of the acryl-modified epoxy resin aqueous solution (1) except that the polymerizable unsaturated group-containing epoxy resin solution was changed to (A), and the polymerizable unsaturated monomer components were changed to 12.8 parts of styrene, 6.4 parts of butyl acrylate, 5.8 parts of acrylic acid and 5 parts of acetoacetoxy methacrylate.

### Preparation of acryl-modified epoxy resin aqueous solution (6)

An acryl-modified epoxy resin (acid value: 45, molecular weight: 45,000, epoxy resin/acryl monomer = 5/5) aqueous solution (6) having a solid content of 30%, was obtained in the same manner as in the preparation of the acryl-modified epoxy resin aqueous solution (1) except that the polymerizable unsaturated group-containing epoxy resin solution was changed to 75 parts of (C) and the polymerizable unsaturated monomer components were changed to 25 parts of styrene, 10.2 parts of butyl acrylate, 5.8 parts of acrylic acid, 4.0 parts of 2-hydroxyethyl methacrylate and 5 parts of acetoacetoxy methacrylate.

### EXAMPLES 6 to 11 and COMPARATIVE EXAMPLES 5 to 8

A mixture comprising the acryl-modified epoxy resin aqueous solution, the lubricant powder, the silica particles and the silane coupling agent as identified in Table 4 or 5, was diluted with deionized water to obtain a coating material having a solid content of 20%. The obtained coating material was coated on the surface treated aluminum material (thickness: 1.0 mm) as identified in Table 4 or 5 so that the dry film thickness would be 3 *µ*m and baked so that the maximum plate temperature reached became 150°C in 30 seconds, followed by tests on the corrosion resistance, the press forming properties, the alkali resistance, the chemical conversion treatment resistance, the electric deposition coating properties, the top coating adhesion, the water resistance, the lubrication properties and the stability of the coating material. The results are shown in Table 6.

As is evident from Table 6, in Example 6 to 11 wherein the coating compositions of the present invention were used, the coating films had excellent properties. On the other hand, in Comparative Example 5 containing no lubricant powder, the press forming properties were inferior, in Comparative Example 6 containing no silica particles, the corrosion resistance was inferior, in Comparative Example 7 containing no silane coupling agent, the water resistance was inferior, and in Comparative Example 8 containing no silica particles and no silane coupling agent, the corrosion resistance was inferior.

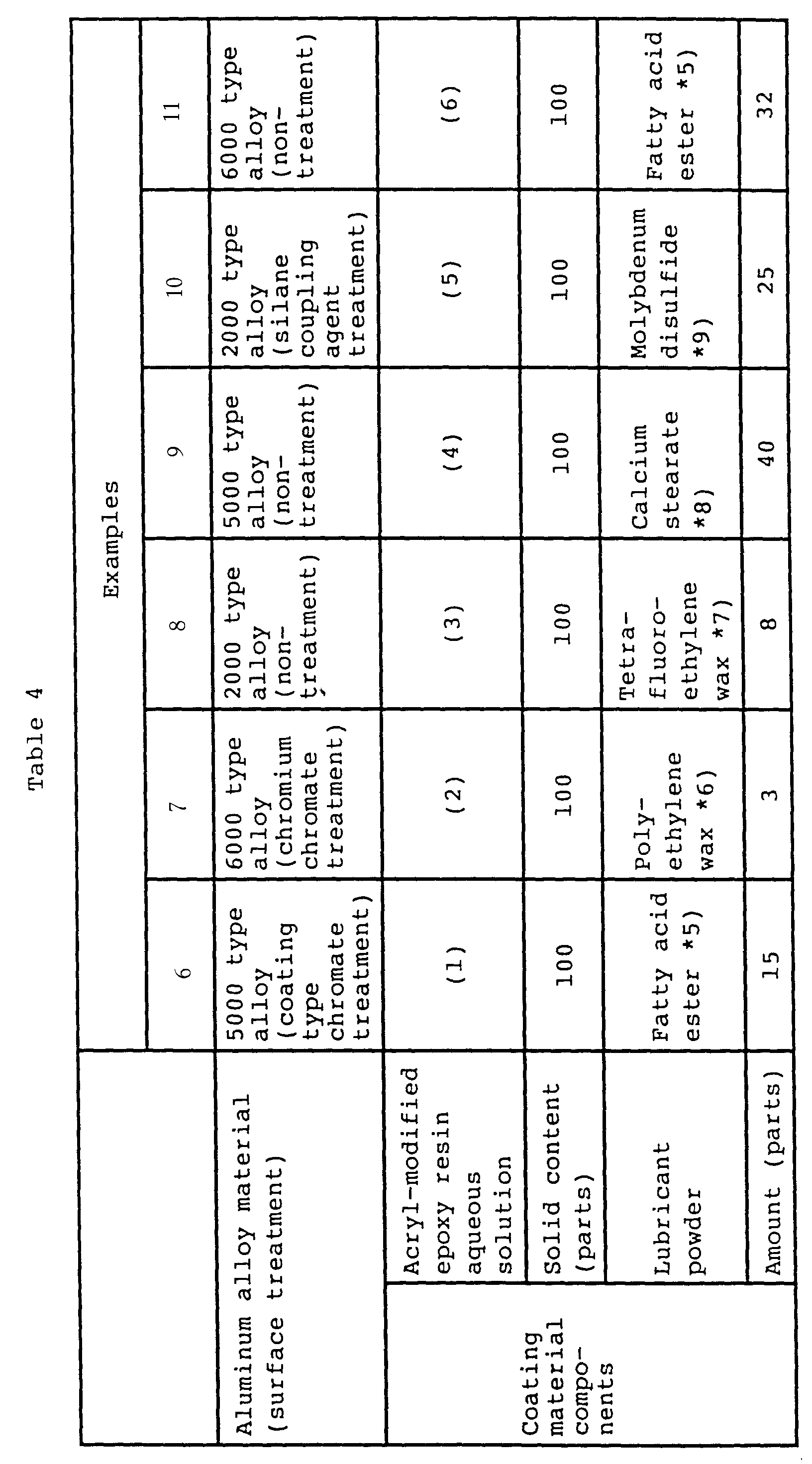

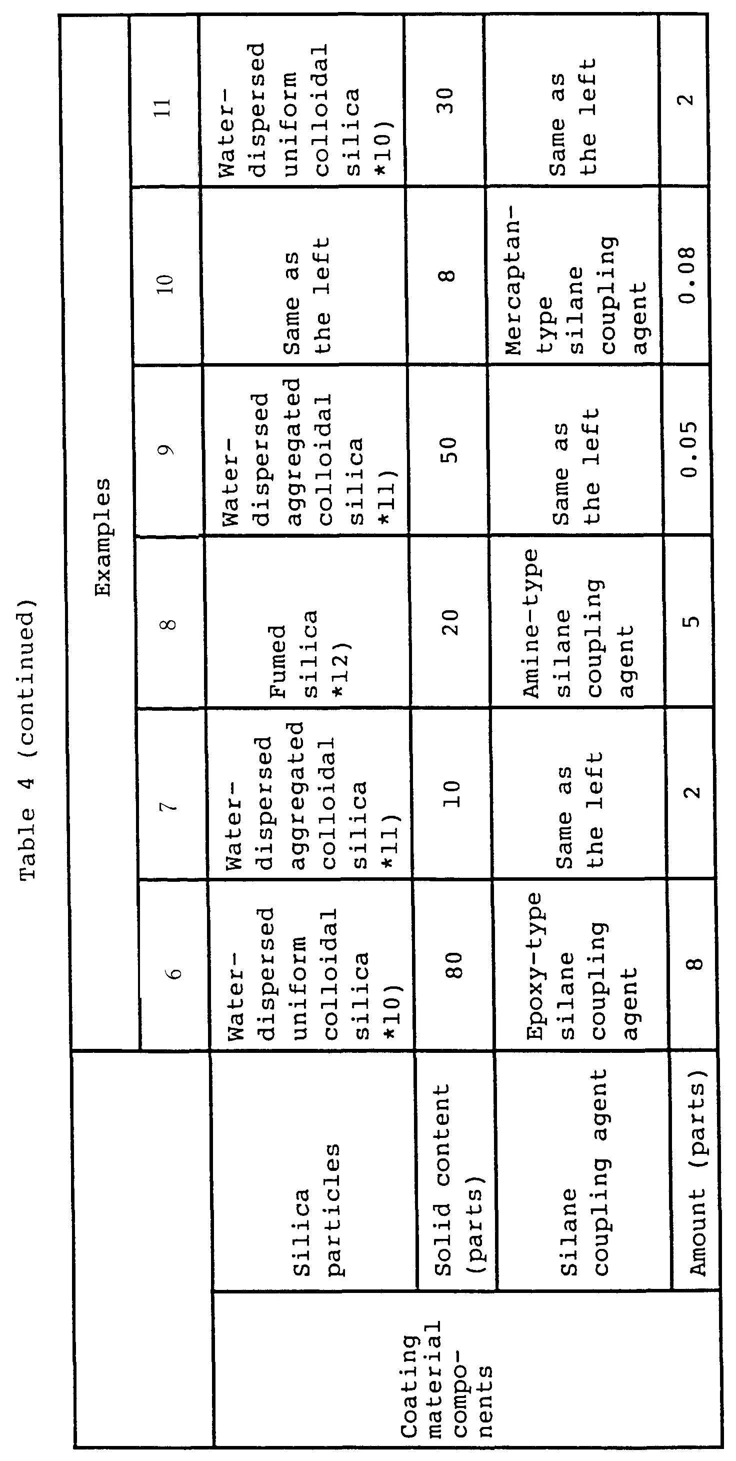

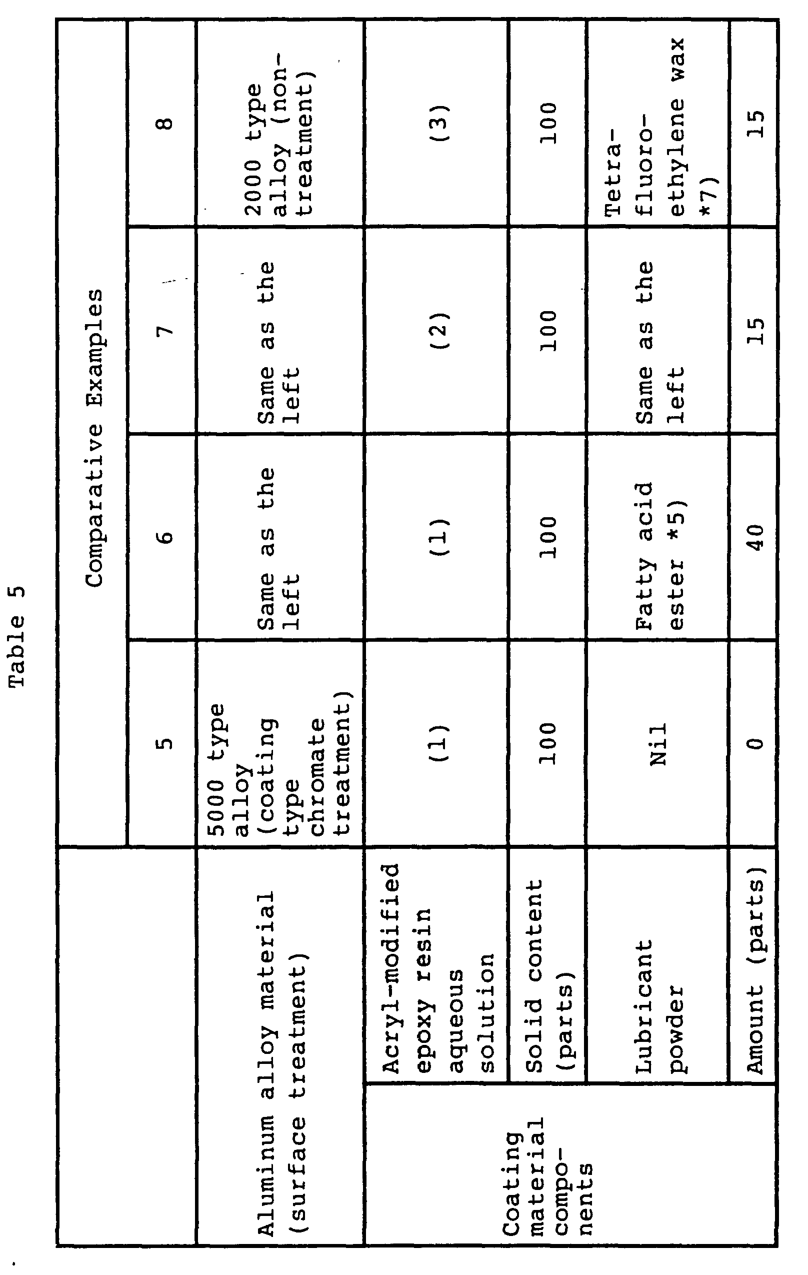

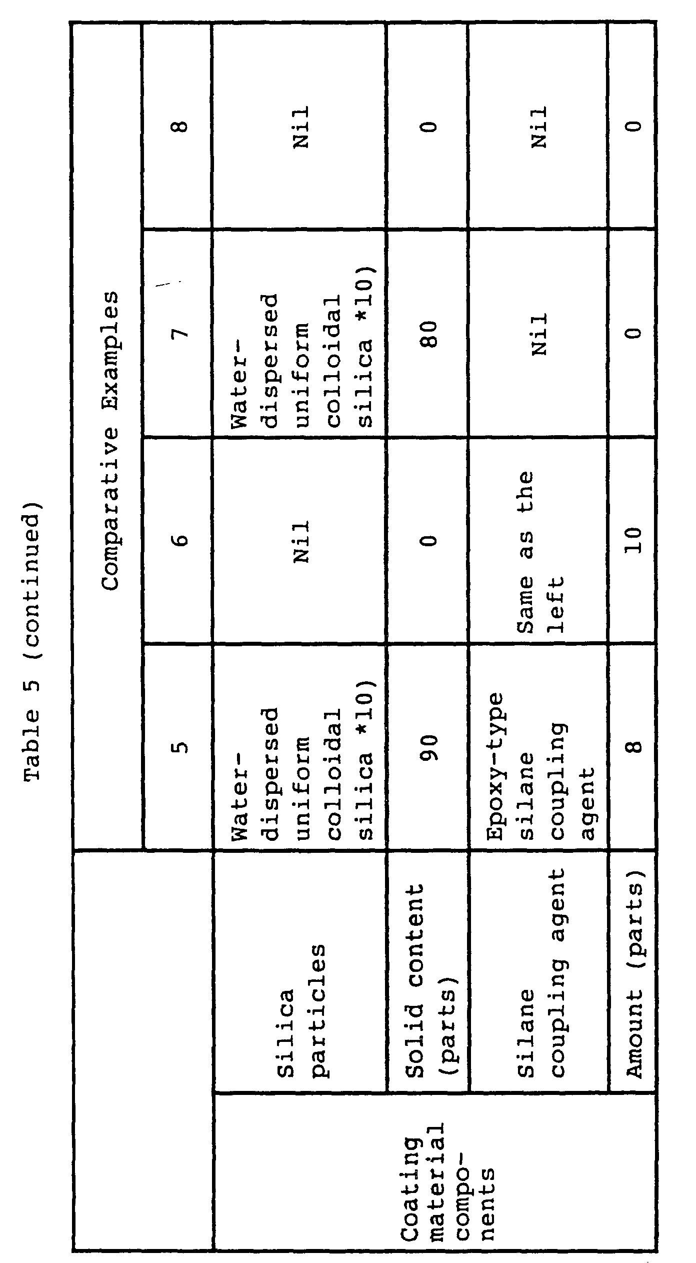

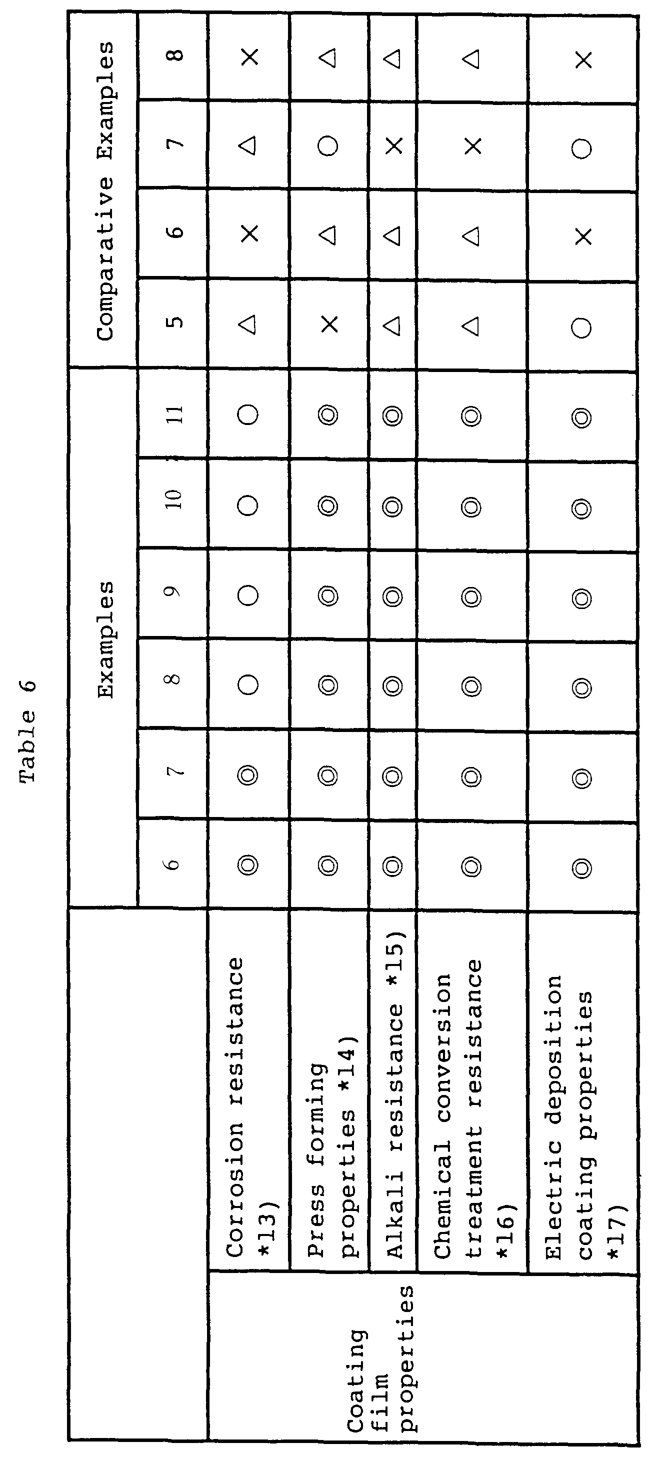

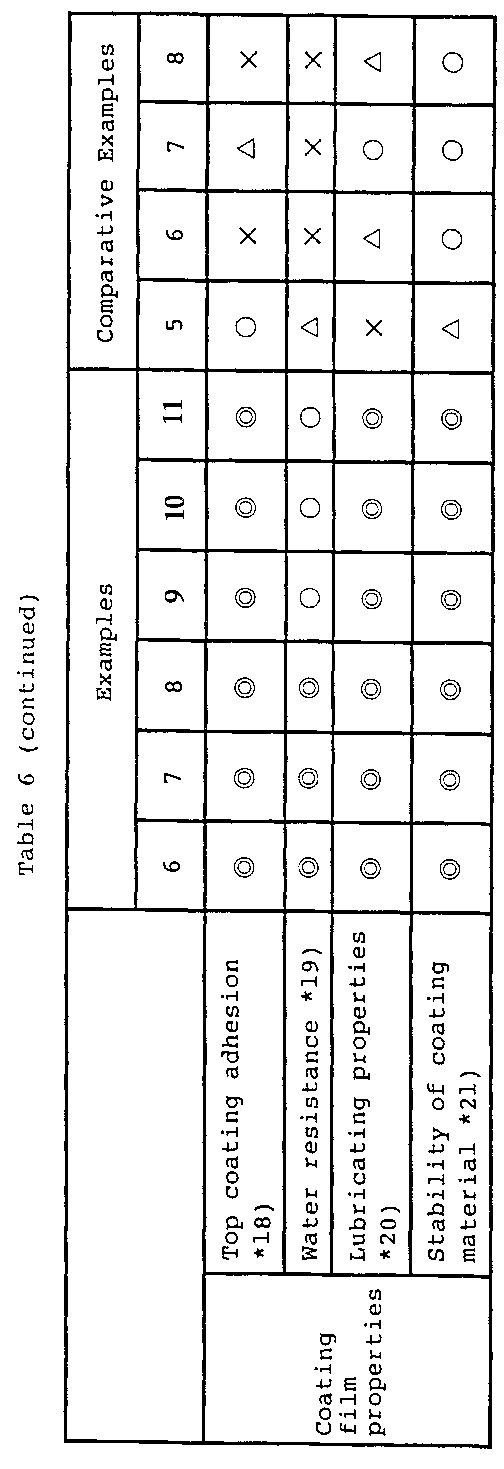

## Claims

1. A coated aluminum material comprising an aluminum material and an aqueous coating composition coated on the surface thereof, wherein the aqueous coating composition comprises (A) a water-soluble or water-dispersible epoxy resin or acryl-modified epoxy resin, (B) a lubricant powder, (C) silica particles and (D) a silane coupling agent.

2. The coated aluminum material according to Claim 1, wherein the aqueous coating composition is a composition comprising 100 parts by weight of (A) a water-soluble or water-dispersible epoxy resin or acryl-modified epoxy resin, from 1 to 50 parts by weight of (B) a lubricant powder, from 5 to 100 parts by weight of (C) silica particles and from 0.01 to 10 parts by weight of (D) a silane coupling agent, and having a solid content of from 10 to 40 wt%.

3. The coated aluminum material according to Claim 1 or 2, wherein the water-soluble or water-dispersible synthetic resin (A) is an epoxy resin.

4. The coated aluminum material according to Claim 1 or 2, wherein the water-soluble or water-dispersible synthetic resin (A) is an acryl-modified epoxy resin obtained by graft polymerizing a polymerizable unsaturated monomer component containing a carboxyl group-containing polymerizable unsaturated monomer to a bisphenol type epoxy resin by means of a polymerizable unsaturated group-containing polybasic acid or its acid anhydride.

5. The coated aluminum material according to Claim 4, wherein the polymerizable unsaturated monomer component contains an acetoacetyl group-containing polymerizable unsaturated monomer.

6. The coated aluminum material according to Claim 4 or 5, wherein the acryl-modified epoxy resin has a weight ratio of the bisphenol type epoxy resin to the polymerizable unsaturated monomer component graft-polymerized to the epoxy resin of from 4:6 to 9:1.

7. The coated aluminum material according to any one of Claims 1 to 6, which is for an exterior panel of an automobile body.

## Patentansprüche

1. Beschichtetes Aluminiummaterial umfassend ein Aluminiummaterial und eine wässrige Beschichtungszusammensetzung, mit der dessen Oberfläche überzogen ist, wobei die wässrige Beschichtungszusammensetzung (A) ein wasserlösliches oder wasserdispergierbares Epoxyharz oder ein acrylmodifiziertes Epoxyharz, (B) ein Schmierpulver, (C) Silicapartikel und (D) ein Silanhaftmittel umfasst.

2. Das beschichtete Aluminiummaterial gemäß Anspruch 1, wobei die wässrige Beschichtungszusammensetzung eine Zusammensetzung ist, die 100 Gewichtsteile (A) eines wasserlöslichen oder wasserdispergierbaren Epoxyharzes oder eines acrylmodifizierten Epoxyharzes, 1 bis 50 Gewichtsteile (B) eines Schmierpulvers, 5 bis 100 Gewichtsteile (C) Silicapartikel und 0,01 bis 10 Gewichtsteile (D) eines Silanhaftmittels enthält und einen Feststoffgehalt von 10 bis 40 Gewichts-% aufweist.

3. Das beschichtete Aluminiummaterial gemäß Anspruch 1 oder 2, wobei das wasserlösliche oder wasserdispergierbare synthetische Harz (A) ein Epoxyharz ist.

4. Das beschichtete Aluminiummaterial gemäß Anspruch 1 oder 2, wobei das wasserlösliche oder wasserdispergierbare synthetische Harz (A) ein acrylmodifiziertes Epoxyharz ist, das durch Blockpolymerisation einer polymerisierbaren ungesättigten Monomerkomponente, die ein carboxygruppenenthaltendes polymerisierbares ungesättigtes Monomer enthält, mit einem Epoxyharz vom Bisphenol-Typ über eine eine polymerisierbare ungesättigte Gruppe enthaltende polybasische Säure oder ihr Anhydrid erhalten wird.

5. Das beschichtete Aluminiummaterial gemäß Anspruch 4, wobei die polymerisierbare ungesättigte Monomerkomponente ein polymerisierbares ungesättigtes Monomer enthält, das eine Acetoacetylgruppe enthält.

6. Das beschichtete Aluminiummaterial gemäß Anspruch 4 oder 5, wobei das acrylmodifizierte Epoxyharz ein Gewichtverhältnis des Epoxyharzes vom Bisphenol-Typ zu der polymerisierbaren ungesättigten Monomerkomponente, die an das Epoxyharz anpolymerisiert wurde, von 4:6 bis 9:1 aufweist.

7. Das beschichtete Aluminiummaterial gemäß einem der Ansprüche 1 bis 6, das für die Außenseite einer Automobilkarosserie bestimmt ist.

## Revendications

1. Matériau d'aluminium revêtu comprenant un matériau d'aluminium et une composition de revêtement aqueuse déposée en revêtement sur la surface de celui-ci, dans lequel la composition de revêtement aqueuse comprend (A) une résine époxyde ou une résine époxyde à modification acryle, soluble dans l'eau ou dispersable dans l'eau, (B) une poudre de lubrifiant, (C) des particules de silice et (D) un agent de couplage au silane.

2. Matériau d'aluminium revêtu selon la revendication 1, dans lequel la composition de revêtement aqueuse est une composition comprenant 100 parties en poids de (A), la résine époxyde ou la résine époxyde à modification acryle, soluble dans l'eau ou dispersable dans l'eau, de 1 à 50 parties en poids de (B), la poudre de lubrifiant, de 5 à 100 parties en poids de (C), les particules de silice, et de 0,01 à 10 parties en poids de (D), l'agent de couplage au silane, et ayant une teneur en matières solides de 10 à 40 % en poids.

3. Matériau d'aluminium revêtu selon la revendication 1 ou 2, dans lequel (A), la résine de synthèse soluble dans l'eau ou dispersable dans l'eau, est une résine époxyde.

4. Matériau d'aluminium revêtu selon la revendication 1 ou 2, dans lequel (A), la résine de synthèse soluble dans l'eau ou dispersable dans l'eau, est une résine époxyde à modification acryle obtenue en polymérisant par greffage un composant monomère insaturé polymérisable contenant un monomère insaturé polymérisable à groupe carboxyle, sur une résine époxyde de type bisphénol au moyen d'un polyacide contenant un groupe insaturé polymérisable ou de son anhydride d'acide.

5. Matériau d'aluminium revêtu selon la revendication 4, dans lequel le composant monomère insaturé polymérisable contient un monomère insaturé polymérisable contenant un groupe acétoacétyle.

6. Matériau d'aluminium revêtu selon la revendication 4 ou 5, dans lequel la résine époxyde à modification acryle présente un rapport pondéral de la résine époxyde de type bisphénol au composant monomère insaturé polymérisable polymérisé par greffage sur la résine époxyde, compris de 4:6 à 9:1.

7. Matériau d'aluminium revêtu selon l'une quelconque des revendications 1 à 6, qui est destiné à un panneau extérieur de carrosserie automobile.
